# EUROPÄISCHE PATENTANMELDUNG

(11) **EP 4 454 789 A1**
(43) Veröffentlichungstag der Anmeldung: **30.10.2024**
(21) Anmeldenummer: 23170368.7
(22) Anmeldetag: 27.04.2023
(51) Int. Cl.: B22F 10/28, B22F 10/37, B33Y 10/00, B33Y 30/00, B33Y 50/02, B22F 10/14, B22F 10/38, B22F 12/60

(54) **VORRICHTUNG UND VERFAHREN ZUR ADDITIVEN FERTIGUNG EINES BAUTEILS**

(71) Anmelder: 2oneLab GmbH, 64293 Darmstadt (DE)
(72) Erfinder: WOLF, Markus, 64293 Darmstadt (DE)
(74) Vertreter: Köllner, Malte

(57) **Zusammenfassung**

Vorgeschlagen werden Vorrichtungen (100) und Verfahren zur additiven Fertigung von Bauteilen (110) aus einem granularen Rohstoff (140). Hierzu wird der granulare Rohstoff (140) Schicht für Schicht aufgetragen und die Bauteile (110) durch selektives Verfestigen der Rohstoffschichten erzeugt. Ein entscheidender Faktor für die Qualität der Bauteile (110) ist dabei die Erzeugung möglichst homogener Schichten mit möglichst glatten bzw. ebenen Oberflächen. Zur Erzeugung der möglichst homogenen Schichten wird eine Wechselspannung eingesetzt, mit der die Teilchen des granularen Rohstoffs (140) oder zumindest eines Teils davon in Schwingungen und/oder Vibrationen versetzt werden, um etwaige Unregelmäßigkeiten und/oder Unebenheiten abzubauen bzw. auszugleichen, welche beim Auftragen der Schichten entstehen können. Mit solcherart homogenisierten Schichten lassen sich Bauteile (110) additiv herstellen, die nicht nur höhere relative Dichten aufweisen, sondern oft auch bessere mechanische und/oder optische Eigenschaften.

## Beschreibung

### Gebiet der Erfindung

Die Erfindung betrifft Vorrichtungen und Verfahren zur additiven Fertigung von Bauteilen aus einem granularen Rohstoff. Additive bzw. generative Fertigung (3D-Druck) hat sich insbesondere in der Luftfahrttechnik, der Medizintechnik und dem Maschinenbau als industriell anwendbare Fertigungstechnologie etabliert. Unter additiver Fertigung versteht man Fertigungstechniken, bei denen Material Schicht für Schicht aufgetragen wird, um dreidimensionale Gegenstände (Bauteile bzw. Werkstücke) zu erzeugen.

Ein Beispiel für eine additive Fertigungstechnik ist das Laserstrahlschmelzen. Es wird häufig für die additive Fertigung von metallischen Bauteilen aus Metallpulvern genutzt. Dabei wird eine Schicht Metallpulver mittels Beschichter auf eine Bauplatte aufgetragen. Mittels Laserstrahl wird auf diese Metallpulverschicht thermische Energie selektiv eingebracht und das Metallpulver dadurch aufgeschmolzen. Durch das anschließende Abkühlen und Verfestigen des aufgeschmolzenen Metallpulvers entsteht ein fester Verbund mit der darunterliegenden Schicht. Die Bauplatte wird anschließend um eine Schichthöhe abgesenkt und erneut eine Schicht Metallpulver mittels Beschichter aufgetragen. Der zyklische Fertigungsprozess wird solange wiederholt, bis das Bauteil vollständig schichtweise aufgebaut wurde.

Neben diversen Vorteilen weist das Laserstrahlschmelzen verfahrensspezifische Herausforderungen auf. Eine dieser Herausforderungen ist die Erzielung einer möglichst homogenen Schicht des aufgetragenen Metallpulvers mit einer möglichst glatten bzw. ebenen Oberfläche. Damit lassen sich nicht nur höhere relative Dichten der additiv gefertigten Bauteile erzielen, sondern oft auch mechanische und optische Eigenschaften der Bauteile verbessern. Das Metallpulver wird häufig mittels Linear- oder Rotationsbewegung einer an dem Beschichter befestigten Beschichterlippe auf die darunterliegende Metallpulverschicht aufgetragen. Da einzelne Metallpulverpartikel bei einer typischen Partikelgrößenverteilung von 20 bis 55 µm und einer typischen Pulverschichtdicke von 20 bis 100 µm durch den Beschichter in Beschichtungsrichtung geschoben werden können, können Furchen in der Pulverschichtoberfläche entstehen. Diese Furchen können die Bauteilqualität beeinträchtigen, insbesondere die Oberflächengüte. Weiterhin erfolgt durch den Pulverauftrag mittels Beschichter infolge des unterschiedlichen Setzverhaltens von Metallpulverpartikeln unterschiedlicher Partikelgröße eine inhomogene Pulververteilung in Beschichtungsrichtung.

Bei einer Beschädigung der Beschichterlippe fällt die Tiefe bzw. Höhe der Furchen um ein Vielfaches höher aus. Eine Beschädigung der Beschichterlippe tritt insbesondere auf, wenn sich Bauteilelemente in Folge eines thermischen Verzugs während des Fertigungsprozesses aus dem Pulver aufwölben oder sich deren Stützstrukturen von der Bauplatte ablösen. Bei der nachfolgenden Beschichtung kollidiert die Beschichterlippe mit den aus dem Pulver herausragenden Bauteilelementen und wird beschädigt. Alternativ kann die Beschichterlippe auch durch Spritzer metallischer Schmelze aus dem Schmelzbad beschädigt werden.

Bei einer Beschädigung der Beschichterlippe oder bei hohen Qualitätsanforderungen an die zu fertigenden Bauteile werden die Beschichterlippen typischerweise nach jedem Fertigungsprozess getauscht, wodurch zusätzliche Kosten entstehen und die Produktivität sinkt. Darüber hinaus kann es erforderlich sein, den Beschichter vor jedem Fertigungsprozess manuell zur Bauplatte auszurichten, sodass beim Auftrag der ersten Metallpulverschicht eine definierte Schichtdicke erreicht werden kann. Entstehen bei dieser manuellen Tätigkeit Bedienungsfehler, kann die Anbindung der Bauteile bzw. deren Stützstrukturen an die Bauplatte beeinträchtigt werden. Die durch Kollision hervorgerufenen Unebenheiten der Beschichterlippe übertragen sich bei den darauffolgenden Beschichtungsvorgängen als Negativ auf die Pulverschicht, was die Homogenität und Ebenheit bzw. Glätte der Oberfläche stark beeinträchtigen kann. Diese Furchen können sich auf die zu fertigenden Bauteile übertragen. Dies führt in vielen Fällen zu einem Ausschuss dieser Bauteile oder erfordert zusätzliche Arbeitsschritte in Form einer Bauteilnachbearbeitung.

### Stand der Technik

Im Stand der Technik finden sich demnach zahlreiche Lösungsvorschläge, um in Vorrichtungen und Verfahren zur additiven Fertigung von Bauteilen aus einem granularen Rohstoff möglichst homogene Schichten des granularen Rohstoffs, wie z.B. eines Metallpulvers, mit einer möglichst glatten bzw. ebenen Oberfläche zu erzielen.

Die Offenlegungsschrift WO 2020/260785 A1 schlägt bspw. vor, das aufgetragene Pulver mithilfe einer Schwingvorrichtung in mechanische Schwingungen bzw. Vibrationen zu versetzen und somit etwaig vorhandene Unregelmäßigkeiten und/der Unebenheiten auszunivellieren, die beim Auftragen des Pulvers entstehen. Ähnliches gilt für die EP 3 943 219 A1, wobei hierzu der Beschichter mithilfe eines Ultraschallgebers in mechanische Schwingungen bzw. Vibrationen versetzt wird, um etwaig vorhandene Unregelmäßigkeiten und/oder Unebenheiten durch Scher- und Reibbewegungen abzutragen.

In der Offenlegungsschrift CN 115555585 A wird eine Pulverstreuvorrichtung vorgeschlagen, bei der mechanische Schwingungen bzw. Vibrationen genutzt werden, um Pulver berührungslos und somit möglichst homogen bzw. glatt aufzutragen. Mithilfe elektrostatischer Felder werden die Pulverteilchen dabei zusätzlich beschleunigt, um die Dichte des aufgetragenen Pulvers zu erhöhen. Die WO 2016/205719 A1 nutzt ebenfalls elektrostatische Felder zum Nachverdichten des Pulvers.

Gemäß den Offenlegungsschriften WO 2009/000360 A1 und US 2018/243768 A1 können elektrostatische Felder jedoch nicht nur zum Beschleunigen von Pulverteilchen und (Nach-)Verdichten des aufgetragenen Pulvers, sondern auch zum berührungslosen Auftrag desselben auf eine Bauplatte genutzt werden.

Die im Stand der Technik vorgeschlagenen Methoden wirken jedoch in vielen Fällen nicht nur auf das aufgetragene Pulver, sondern auch auf das Bauteil. Dadurch kann das Bauteil, Teile hiervon bzw. etwaige Stützstrukturen, die zum Aufbau des Bauteils notwendig sind, beschädigt werden. Dies gilt vor allem dann, wenn größere Massen wie bspw. der Beschichter oder die Bauplatte in Schwingungen versetzt werden oder das aufgetragene Pulver mithilfe elektrostatischer Kräfte nachverdichtet wird. Ebenso kann das Bauteil und etwaige Stützstrukturen beschädigt werden, wenn einzelne Pulverteilchen stark beschleunigt und unkontrolliert auf das Bauteil und die Stützstrukturen einschlagen. Dies beeinträchtigt nicht nur die Qualität der Bauteile, sondern kann auch zusätzliche Arbeitsschritte in Form einer Bauteilnachbearbeitung nach sich ziehen oder sogar zum Ausschuss von Bauteilen führen.

### Aufgabe

Aufgabe der Erfindung ist es, Vorrichtungen und Verfahren zur additiven Fertigung von Bauteilen aus einem granularen Rohstoff bereitzustellen, mit denen die Qualität der Bauteile verbessert bzw. eine hohe Qualität der Bauteile sichergestellt werden kann.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Im Folgenden soll die Verwendung der Einzahl die Mehrzahl nicht ausschließen, was auch im umgekehrten Sinn zu gelten hat, soweit nichts Gegenteiliges offenbart ist.

Zudem werden einzelne Verfahrensschritte beschrieben. Die Schritte werden in einer bevorzugten Variante der Erfindung in der angegebenen Reihenfolge ausgeführt. Die Schritte müssen aber nicht notwendigerweise in der angegebenen Reihenfolge durchgeführt werden, und das zu schildernde Verfahren kann auch weitere, nicht genannte Schritte aufweisen.

Zur Lösung der Aufgabe wird eine Vorrichtung zur additiven Herstellung eines Bauteils aus einem granularen Rohstoff vorgeschlagen, wobei die Vorrichtung folgende Komponenten aufweist:
- einen Träger mit einer Aufnahme für den granularen Rohstoff;
- eine Bauteilerzeugungseinheit zur Herstellung des Bauteils, wobei die Bauteilerzeugungseinheit und der Träger mit der Aufnahme ausgebildet sind, um das Bauteil sukzessive durch selektives Verfestigen einer Schicht des granularen Rohstoffs in der Aufnahme des Trägers herzustellen;
- eine Spannungsversorgung, die eine Wechselspannung zur Verfügung stellt;
- eine Elektrode; und
- eine Steuerung, wobei der Träger, die Spannungsversorgung, die Elektrode und die Steuerung ausgebildet und dazu eingerichtet sind, um granularen Rohstoff, der sich in der Aufnahme des Trägers befindet, mit der Wechselspannung zu beaufschlagen und zumindest einen Teil des granularen Rohstoffs, der sich in der Aufnahme des Trägers befindet und mit der Wechselspannung beaufschlagt ist, mithilfe der Wechselspannung in mechanische Schwingungen und/oder Vibrationen zu versetzen und auf diese Weise etwaig vorhandene Unregelmäßigkeiten und/oder Unebenheiten des zumindest einen Teils des granularen Rohstoffs, die beim Befüllen der Aufnahme des Trägers mit der Schicht des granularen Rohstoffs entstehen, abzubauen und/oder auszugleichen.

Wird der granulare Rohstoff in der Aufnahme des Trägers mit der Wechselspannung beaufschlagt, werden die Teilchen des granularen Rohstoffs durch das von der Wechselspannung erzeugte elektrische Wechselfeld abwechselnd von der Elektrode angezogen bzw. abgestoßen. Auf diese Weise werden die Teilchen des granularen Rohstoffs in Schwingungen und/oder Vibrationen versetzt. Dabei wird typischerweise der Teil des granularen Rohstoffs in Schwingungen und/oder Vibrationen versetzt, der der Elektrode am nächsten liegt.

Die Schwingungen und/oder Vibrationen führen dazu, dass sich Unregelmäßigkeiten und/oder Unebenheiten des zumindest einen Teils des granularen Rohstoffs, die beim Befüllen der Aufnahme des Trägers mit der Schicht des granularen Rohstoffs entstehen können (bspw. Furchen), abbauen und ausgleichen. In vielen Fällen äußert sich das dadurch, dass sich die Teilchen des zumindest einen Teils des granularen Rohstoffs gleichmäßiger in der Aufnahme des Trägers verteilen. Zudem wird die Oberfläche des zumindest einen Teils des granularen Rohstoffs eingeebnet bzw. geglättet und der granulare Rohstoff oder zumindest ein Teil davon verdichtet. Des Weiteren können Unregelmäßigkeiten in der Verteilung der Teilchen der Größe nach ausgeglichen werden. Typischerweise handelt es sich bei dem zumindest einen Teil des granularen Rohstoffs um die oder einen Teil der Schicht des granularen Rohstoffs, die zuletzt in die Aufnahme des Trägers eingetragen wurde, um als nächstes zur Herstellung des Bauteils selektiv verfestigt zu werden. Das Abbauen und/oder Ausgleichen der genannten Unregelmä-ßigkeiten und/oder Unebenheiten bewirkt demnach in vielen Fällen unmittelbar eine Verbesserung der Qualität der Bauteile, die mit der vorgeschlagenen Vorrichtung hergestellt werden.

Bereits verfestigte Teile des Rohstoffs werden dabei schon aufgrund ihrer größeren Masse in der Regel weit weniger stark in Schwingungen und/oder Vibrationen versetzt, d.h. die Amplitude der Schwingungen und/oder Vibrationen dieser Teile ist kleiner als die Amplitude der Schwingungen und/oder Vibrationen, die die Teilchen des granularen Rohstoffs aufweisen. Dieser Unterschied in der Amplitude der Schwingungen und/oder Vibrationen stellt eine Selektion dar, die bei den bekannten Vorrichtungen bspw. mit einer Schwingvorrichtung nicht oder weit weniger stark ausgeprägt stattfindet. Die Selektion betrifft dabei insbesondere das Bauteil oder Teile hiervon oder etwaige Stützstrukturen, welche typischerweise weniger stark in Schwingungen versetzt werden als die Teilchen des granularen Rohstoffs. Die Selektion kann zusätzlich verstärkt werden, indem das Bauteil und/oder etwaige Stützstrukturen bei der Herstellung des Bauteils durch die Bauteilerzeugungseinheit mit dem Träger verbunden werden, so dass das Bauteil und/oder etwaige Stützstrukturen nicht oder zumindest nicht ganz unabhängig vom Träger schwingen können.

Darüber hinaus werden auch nicht alle Teilchen des granularen Rohstoffs in gleicher Weise in Bewegung versetzt. Teilchen, die in ihrer Bewegungsfreiheit durch den Träger, das Bauteil oder andere Teilchen des granularen Rohstoffs eingeschränkt sind, führen ebenfalls kleinere Schwingbewegungen bzw. Vibrationen durch. Teilchen, die in dieser Hinsicht nicht eingeschränkt sind, führen hingegen Schwingungen und/oder Vibrationen mit größeren Amplituden aus. Auch dies stellt eine Selektion dar, welche dazu führt, dass vor allem die Teilchen des Teils des granularen Rohstoffs in Schwingungen und/oder Vibrationen versetzt werden, der zur selektiven Verfestigung durch die Bauteilerzeugungseinheit zur Verfügung steht. Etwaig vorhandene Unregelmäßigkeiten und/oder Unebenheiten werden demnach vor allem in den Bereichen des granularen Rohstoffs in der Aufnahme des Trägers abgebaut und ausgeglichen, die als nächstes durch die Bauteilerzeugungseinheit selektiv verfestigt werden sollen.

Mit der vorgeschlagenen Vorrichtung können demnach die Nachteile vermieden werden, die sich durch eine Bewegung der bereits verfestigten Teile ergeben, insbesondere des Bauteils, Teilen hiervon oder etwaiger Stützstrukturen. Dies schlägt sich nicht nur positiv auf die Qualität des Bauteils nieder, sondern führt auch zu weniger Ausschuss und reduziert den Aufwand für etwaige Nachbearbeitungen.

Durch Stöße und Kollisionen der Teilchen untereinander, mit dem Träger, dem Bauteil, Teilen hiervon oder etwaigen Stützstrukturen verläuft die durch die Wechselspannung induzierte Bewegung der Teilchen nicht notwendigerweise geordnet, sondern ist typischerweise chaotisch. Diese Stöße und/oder Kollisionen führen in der Regel dazu, dass sich die genannten Unregelmäßigkeiten und Unebenheiten des zumindest einen Teils des granularen Rohstoffs abbauen bzw. ausgleichen. Wird die Anregung der Teilchen durch die Wechselspannung ausgeschaltet, kommen die Teilchen wieder zur Ruhe und nehmen dabei einen Ruhezustand bzw. Ruhepositionen ein. Beim Übergang von dem durch die Wechselspannung angeregten Zustand hin zu diesem Ruhezustand ordnen sich die Teilchen regelmäßig an. Die Teilchen können mithilfe der angelegten Wechselspannung demnach nicht nur gleichmäßiger verteilt, sondern auch in eine regelmäßigere Anordnung gebracht werden. Diese gleichmäßige Verteilung und regelmäßige Anordnung führt u.a. zu einer Glättung der Oberfläche des granularen Rohstoffs, insbesondere des Teils des granularen Rohstoffs, der zur selektiven Verfestigung durch die Bauteilerzeugungseinheit zur Verfügung steht.

Vorzugsweise liegt die Frequenz der Wechselspannung im Bereich von 3 Hz bis 3 kHz, besonders bevorzugt im Bereich von 30 Hz bis 300 Hz. Auf diese Weise lassen sich unerwünschte elektrische Anregungen vermeiden bzw. auf ein akzeptables Maß reduzieren, d.h. die Anregung der Teilchen des granularen Rohstoffs kann somit im Wesentlichen auf mechanische Schwingungen und/oder Vibrationen beschränkt werden. In vielen Fällen reicht es aus, auf die Netzfrequenz von bspw. 50 Hz oder 60 Hz zurückzugreifen, womit Komponenten zur Umformung und/oder Umrichtung der Netzfrequenz eingespart werden können.

Um den granularen Rohstoff mit der Wechselspannung zu beaufschlagen, kann die Wechselspannung bspw. zwischen dem Träger oder einem Teil des Trägers und der Elektrode angelegt werden. Das Beaufschlagen kann jedoch auch mit einer weiteren Elektrode erfolgen, die mit dem Träger in keinem direkten elektrischen Kontakt stehen muss. In diesem Fall sind die beiden Elektroden vorzugsweise so angeordnet oder können derart verfahren bzw. bewegt werden, dass sich die Aufnahme des Trägers zwischen der Elektrode und der weiteren Elektrode befindet.

Der granulare Rohstoff kann ein Metallpulver sein, bspw. ein Titan-, Stahl-, Cobalt-Chrom- oder Kupferpulver sein oder eine Mischung derselben. Mit der vorgeschlagenen Vorrichtung ist es jedoch auch denkbar, andere granulare Rohstoffe zu verarbeiten, insbesondere keramische Pulver, Kunststoffgranulate oder Sand. Die Teilchen des granularen Rohstoffs können demnach Pulverpartikel, Sandkörner und/oder Kunststoffkügelchen sein. Dabei können die Teilchen unterschiedliche Formen und Größen aufweisen.

Bei dem Bauteil handelt es sich in bevorzugten Ausführungsformen um ein für den Gebrauch fertiges Bauteil. Es kann sich aber auch um einen Grünkörper oder ein Zwischenprodukt handeln, welches durch nachgelagerte Arbeitsschritte weiterverarbeitet oder nachgearbeitet werden muss.

Die Wechselspannung kann je nach Anwendungsfall im Niederspannungsbereich (bis 1000 V) oder Hochspannungsbereich (≥ 1000 V) liegen. Hochspannungen erfordern in der Regel besondere Schutzmaßnahmen, um Überschläge und elektrische Anregungen zu vermeiden. Niederspannungen sind deshalb in der Regel leichter handzuhaben als Hochspannungen. Niedrigere Spannungen erzeugen jedoch weniger starke elektrische Felder, so dass der granulare Rohstoff oder der zumindest eine Teil des granularen Rohstoffs auch weniger stark in Schwingungen und/oder Vibrationen versetzt wird als beim Einsatz von höheren Spannungen. Hier gilt es einen angemessenen Ausgleich zwischen dem Aufwand für die Schutzmaßnahmen und dem zu erzielenden Ergebnis einer möglichst homogenen Verteilung des granularen Rohstoffs mit einer möglichst glatten bzw. ebenen Oberfläche zu finden. Vorzugsweise liegt die Wechselspannung deshalb im Hochspannungsbereich, d.h. sie weist Effektivwerte im Bereich von 1 kV bis 100 kV auf, besonders bevorzugt im Bereich von 3 kV bis 30 kV oder 6 kV bis 15 kV. In vielen Fällen werden optimale Ergebnisse für einen Effektivwert von 12 kV erzielt.

Die Wechselspannung kann verschiedene zeitliche Verläufe aufweisen. Sie kann einen Rechteckverlauf, einen Dreieckverlauf oder einen sinus- bzw. kosinusförmigen Verlauf aufweisen. Die Wechselspannung kann auch einen Verlauf aufweisen, der eine Superposition aus einem Rechteck-, Dreiecks-, sinus- und/oder kosinusförmigen Verlauf darstellt. Durch die Wahl des Verlaufs kann die Homogenisierung und/oder Verdichtung des granularen Rohstoffs oder des zumindest einen Teils des granularen Rohstoffs bzw. die zugehörigen Oberflächeneigenschaften verbessert werden.

Die Elektrode ist vorzugsweise als Metallplatte ausgebildet. Um Überschläge, Verschleiß und Beschädigungen zu vermeiden oder wenigstens zu reduzieren, kann die Elektrode zudem mit einem thermisch beständigen Material isoliert sein. Das thermisch beständige Material kann bspw. ein Glas oder eine Keramik sein.

Die Elektrode und/oder der Träger können verfahrbar ausgestaltet sein. Dies erleichtert in vielen Fällen das Befüllen der Aufnahme mit granularem Rohstoff, insbesondere mit einer neuen Schicht granularen Rohstoffs bspw. mithilfe eines Beschichters und einer Beschichterlippe oder einer Beschichterbürste.

Je näher die Elektrode an die Aufnahme des Trägers mit dem granularen Rohstoff gebracht wird, desto ausgeprägter sind auch die durch die Wechselspannung induzierten Schwingungen und/oder Vibrationen. Die Homogenisierung und/oder Verdichtung des granularen Rohstoffs oder des zumindest einen Teils des granularen Rohstoffs bzw. die zugehörigen Oberflächeneigenschaften hängen demnach vom Abstand der Elektrode zu der Aufnahme des Trägers ab. Um ein möglichst homogenes Ergebnis zu erzielen, können die Elektrode, der Träger und die Steuerung deshalb ausgebildet und dazu eingerichtet sein, um die Elektrode in einem vorgegebenen Abstand zu der Aufnahme des Trägers zu verfahren.

Der vorgegebene Abstand kann hierzu bspw. in einem Bereich von 0,1 mm bis 10 mm liegen. Vorzugsweise liegt der vorgegebene Abstand in einem Bereich von 0,5 mm bis 5 mm.

Das Verfahren der Elektrode in einem vorgegebenen Abstand zu der Aufnahme des Trägers kann zudem im Rahmen einer Linearbewegung bzw. Translation erfolgen. Dies erleichtert in vielen Fällen die Versorgung der Elektrode mit der Wechselspannung.

Neben dem Abstand hängt das Ergebnis der Homogenisierung und/oder Verdichtung des granularen Rohstoffs oder des zumindest einen Teils des granularen Rohstoffs bzw. die zugehörigen Oberflächeneigenschaften davon ab, mit welcher Geschwindigkeit die Elektrode und/oder der Träger verfahren wird. Dabei werden die besten Ergebnisse erzielt, wenn die Elektrode und/oder der Träger möglichst gleichmäßig verfahren werden. Die Elektrode, der Träger und die Steuerung können demnach ausgebildet und dazu eingerichtet sein, um die Elektrode zumindest im Bereich der Aufnahme des Trägers mit einer vorgegebenen Geschwindigkeit und/oder einem vorgegebenen Geschwindigkeitsprofil zu verfahren.

Wird die Elektrode im Rahmen einer Rotationsbewegung über die Aufnahme des Trägers verfahren, weist das Geschwindigkeitsprofil größere Geschwindigkeiten für die Teile der Elektrode auf, die weiter von der Drehachse entfernt sind. Das Geschwindigkeitsprofil kann auch so gewählt werden, um ein schnelles Heranfahren der Elektrode an die Aufnahme des Trägers zu vermöglichen und die Elektrode nach erfolgter Homogenisierung und/oder Verdichtung auch wieder schnell von der Aufnahme wegzubewegen. Damit kann u.a. die Bauzeit der Bauteile verkürzt werden, die mit den vorgeschlagenen Vorrichtungen hergestellt werden können.

Die Aufgabe wird zudem gelöst durch ein Verfahren zur additiven Herstellung eines Bauteils aus einem granularen Rohstoff mit folgenden Schritten:
1. Eine der soeben vorgeschlagenen Vorrichtungen wird bereitgestellt.
2. Die Aufnahme des Trägers wird mit einer Schicht des granularen Rohstoffs befüllt.
3. Der granulare Rohstoff in der Aufnahme des Trägers wird mit der Wechselspannung beaufschlagt, wobei zumindest ein Teil des granularen Rohstoffs, mit der die Aufnahme des Trägers befüllt wurde, mithilfe der Wechselspannung in mechanische Schwingungen und/oder Vibrationen versetzt wird und mithilfe der mechanischen Schwingungen und/oder Vibrationen etwaig vorhandene Unregelmäßigkeiten und/oder Unebenheiten des zumindest einen Teils des granularen Rohstoffs, die beim Befüllen der Aufnahme des Trägers mit der Schicht des granularen Rohstoffs entstehen, abgebaut und/oder ausgeglichen werden.
4. Die Bauteilerzeugungseinheit verfestigt die Schicht des granularen Rohstoffs selektiv, um das Bauteil herzustellen.

Die Verfahrensschritte 2 bis 4 werden in der Regel so lange wiederholt, bis das Bauteil vollständig hergestellt bzw. fertig ist. Dabei kann vor allem durch die wiederholte Anwendung des 3. Verfahrensschritts die Qualität des Bauteils oft in entscheidender Weise verbessert werden.

Das vorgeschlagene Verfahren lässt sich mit einer der vorgeschlagenen Vorrichtungen verbessern, mit denen die Elektrode in einem vorgegebenen Abstand zu der Aufnahme des Trägers verfahren werden kann. In dem Fall kann die Elektrode bei Durchführung des oben beschriebenen 3. Verfahrensschritts in einem vorgegebenen Abstand zu der Aufnahme des Trägers verfahren werden und der Abstand dabei gewählt werden, um das Abbauen und/oder Ausgleichen der etwaig vorhandenen Unregelmäßigkeiten und/oder Unebenheiten des zumindest einen Teils des granularen Rohstoffs durch die mechanischen Schwingungen und/oder Vibrationen zu optimieren.

Der Abstand, mit dem das Abbauen und/oder Ausgleichen der etwaig vorhandenen Unregelmäßigkeiten und/oder Unebenheiten des zumindest einen Teils des granularen Rohstoffs durch die mechanischen Schwingungen und/oder Vibrationen optimiert werden kann, kann bspw. mithilfe von Messungen bestimmt werden, bei denen eine bestimmte Oberflächeneigenschaft des zumindest einen Teils des granularen Rohstoffs in der Aufnahme des Trägers für verschiedene Abstände bestimmt wird und derjenige Abstand ausgewählt wird, bei dem die Oberflächeneigenschaft einen sehr guten oder den besten Wert aufweist. Diese Messungen können bspw. mithilfe eines Profilometers durchgeführt werden, um bspw. die maximale Höhendifferenz zu bestimmen, die der zumindest eine Teil aufweist, oder die Standardabweichung von einer mittleren Höhe des mit dem Profilometers bestimmten Höhenprofils des zumindest einen Teils des granularen Rohstoffs. Der optimale Abstand wäre in diesen Fällen der Abstand, bei denen die maximale Höhendifferenz oder die Standardabweichung den kleinsten Wert aufweist. Ebenso ist es möglich andere Messverfahren zu nutzen und andere Eigenschaften zu betrachten. Bspw. kann die Oberfläche des granularen Rohstoffs abfotografiert werden und mithilfe von Bildbearbeitungsmethoden auf die Oberflächenbeschaffenheit geschlossen werden. Hierzu kann bspw. der Kontrast der Bilder oder der maximale Helligkeitsunterschied herangezogen werden.

Neben Oberflächeneigenschaften können auch die Dichte des granularen Rohstoffs und/oder die Verteilung der Teilchen der Größe nach optimiert werden. Eine Kombination dieser Eigenschaften kann ebenfalls Gegenstand der Optimierung sein.

Die Messungen müssen auch nicht notwendigerweise an granularem Rohstoff in der Aufnahme des Trägers erfolgen. Hierfür können auch Referenzbehältnisse und/oder Testapparturen verwendet werden, welche vorzugsweise Eigenschaften aufweisen, die mit den Eigenschaften der Aufnahme des Trägers vergleichbar sind. Dazu gehören geometrische Abmessungen wie bspw. Höhe, Breite und Tiefe, Form und Material des Trägers bzw. des Behältnisses.

Die Oberfläche des granularen Rohstoffs oder zumindest eines Teils des granularen Rohstoffs in der Aufnahme des Trägers kann auch nach dem oben beschriebenen 3. Verfahrensschritt noch kleine Risse, Rillen und/oder Dellen aufweisen. Diese kleinen Risse, Rillen und/oder Dellen sehen in vielen Fällen wie die Risse, Rillen und/oder Dellen einer Orangenhaut aus. Diese Orangenhauteffekte lassen sich in vielen Fällen durch die oben beschriebenen Messungen quantifizieren und durch die richtige Wahl des Abstandes reduzieren oder sogar vermeiden. Das Reduzieren oder Vermeiden der Orangenhauteffekte stellt ebenfalls eine Optimierung des Abbauens und/oder Ausgleichens der etwaig vorhandenen Unregelmäßigkeiten und/oder Unebenheiten des zumindest einen Teils des granularen Rohstoffs durch die mechanischen Schwingungen und/oder Vibrationen dar.

Das Verfahren lässt sich auch mit den vorgeschlagenen Vorrichtungen verbessern, mit denen die Elektrode nicht nur in einem vorgegebenen Abstand zu der Aufnahme des Trägers verfahren werden kann, sondern auch mit einer vorgegebenen Geschwindigkeit und/oder einem vorgegebenen Geschwindigkeitsprofil. Die Elektrode kann somit bei Durchführung des oben beschriebenen 3. Verfahrensschritts mit einer vorgegebenen Geschwindigkeit und/oder einem vorgegebenen Geschwindigkeitsprofil verfahren werden und die vorgegebenen Geschwindigkeit und/oder das vorgegebene Geschwindigkeitsprofil gewählt werden, um das Abbauen und/oder Ausgleichen der etwaig vorhandenen Unregelmäßigkeiten und/oder Unebenheiten des zumindest einen Teils des granularen Rohstoffs durch die mechanischen Schwingungen und/oder Vibrationen zu optimieren.

Die optimale Geschwindigkeit und/oder das optimale Geschwindigkeitsprofil kann ebenfalls mithilfe der oben beschriebenen Messungen bestimmt werden. Ebenso können durch die richtige Wahl der vorgegebenen Geschwindigkeit die oben beschriebenen Orangenhauteffekte reduziert oder sogar vermieden werden.

Die vorgegebene Geschwindigkeit und/oder das vorgegebene Geschwindigkeitsprofil kann bspw. einen Wert im Bereich von 5 bis 200 mm/s, vorzugsweise 20 bis 50 mm/s, besonders bevorzugt 30 bis 40 mm/s aufweisen. In vielen Fällen werden die besten Ergebnisse erzielt, wenn die vorgegebene Geschwindigkeit und/oder das vorgegebene Geschwindigkeitsprofil einen Wert von 35 mm/s aufweist.

Das beste Ergebnis wird in vielen Fällen dann erzielt, wenn sowohl der Abstand als auch die vorgegebene Geschwindigkeit und/oder das vorgegebene Geschwindigkeitsprofil gewählt werden, um das Abbauen und/oder Ausgleichen der etwaig vorhandenen Unregelmäßigkeiten und/oder Unebenheiten des zumindest einen Teils des granularen Rohstoffs durch die mechanischen Schwingungen und/oder Vibrationen zu optimieren. Gerade die genannten Orangenhauteffekte können auf diese Weise noch stärker reduziert werden und in vielen Fällen sogar vollständig eliminiert werden bzw. auf ein Maß reduziert werden, dass diese Effekte nicht mehr ins Gewicht fallen.

Die Steuerung einer der vorgeschlagenen Vorrichtungen kann so eingerichtet werden, um - abgesehen vom Schritt des Bereitstellens - die Schritte eines der soeben vorgeschlagenen Verfahren auszuführen. Eine Lösung der Aufgabe besteht deshalb auch in einem Computerprogramm, das Befehle umfasst, die bewirken, dass eine Steuerung einer der vorgeschlagenen Vorrichtungen die Schritte eines der vorgeschlagenen Verfahren ausführt, nachdem die Vorrichtung bereitgestellt wurde.

Ein computerlesbares Medium, auf dem das soeben beschriebene Computerprogramm gespeichert ist, stellt ebenfalls eine Lösung der Aufgabe dar.

Weitere Einzelheiten und Merkmale ergeben sich aus der nachfolgenden Beschreibung bevorzugter Ausführungsbeispiele in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine Vorrichtung zur additiven Herstellung eines Bauteils;
- Fig. 2: einen Ausschnitt der in Fig. 1 gezeigten Vorrichtung;
- Fig. 3: Diagramm mit Verläufen einer maximalen Höhendifferenz als Funktion einer Verfahrgeschwindigkeit für verschiedene Abstände;
- Fig. 4: einen Ablaufplan eines der vorgeschlagenen Verfahren; und
- Fig. 5: einen Abschnitt eines Referenzträgers mit einer Referenzaufnahme, die mit granularem Rohstoff befüllt ist, dessen Oberfläche ausgeprägte Orangenhauteffekte aufweist;
- Fig. 6: einen Abschnitt eines Referenzträgers mit einer Referenzaufnahme, die mit granularem Rohstoff befüllt ist, dessen Oberfläche so gut wie keine Orangenhauteffekte aufweist;
- Fig. 7: eine stilisierte Darstellung eines Abschnitts eines Referenzträgers mit einer Referenzaufnahme, die mit granularem Rohstoff befüllt ist, dessen Oberfläche ausgeprägte Orangenhauteffekte aufweist; und
- Fig. 8: eine stilisierte Darstellung eines Abschnitts eines Referenzträgers mit einer Referenzaufnahme, die mit granularem Rohstoff befüllt ist, dessen Oberfläche so gut wie keine Orangenhauteffekte aufweist.

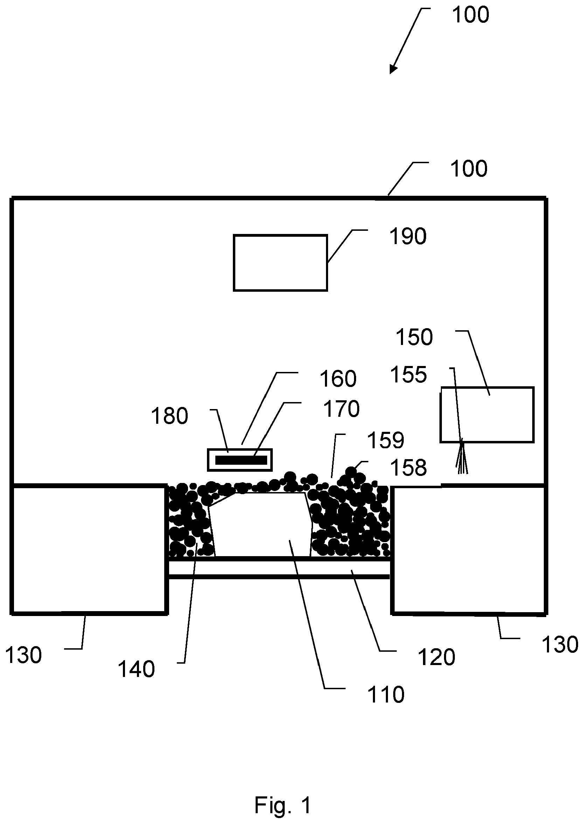

Fig. 1 zeigt eine Vorrichtung 100 zur additiven Herstellung eines Bauteils 110. Das Bauteil 110 befindet sich auf einer Bauplatte 120. Die Bauplatte 120 wird von Trägerelementen 130 begrenzt. Die Trägerelemente 130 und die Bauplatte 120 bilden einen Träger mit einer Aufnahme. In der Aufnahme des von der Bauplatte 120 und den Trägerelementen 130 gebildeten Trägers befindet sich neben dem Bauteil 110 granularer Rohstoff 140. In anderen Ausführungsbeispielen kann die Bauplatte 120 lediglich von nur einem Trägerelement 130 begrenzt sein. Die Bauplatte 120 befindet sich in diesem Fall bspw. in einer entsprechend geformten Aussparung des Trägerelements 130 und kann in dieser Aussparung auch dem additiven Fertigungsprozess entsprechend hin- und herbewegt werden. Sie kann aber auch von mehr als zwei Trägerelementen 130 begrenzt werden. Eine einteilige Ausführung des Trägers mit der Aufnahme ist ebenfalls möglich.

Die Bauplatte 120 hat in dem in Fig. 1 gezeigten Ausführungsbeispiel eine im Wesentlichen rechteckige Grundfläche. In anderen Ausführungsformen kann sie auch andere Grundflächen aufweisen, bspw. eine im Wesentlichen quadratische, kreisförmige oder ovale Grundfläche.

Der in Fig. 1 gezeigte granulare Rohstoff 140 wurde von einem Beschichter 150 mit einer Beschichterbürste 155 in die Aufnahme des Trägers eingebracht. Der Beschichter 150 mit der Beschichterbürste 155 wird dazu in einer Linearbewegung über die Aufnahme gefahren. Der Beschichter 150 befüllt die Aufnahme dabei mit einer Schicht granularen Rohstoffs 140. Zuviel aufgetragener Rohstoff wird von der Beschichterbürste 155 wieder abgetragen, was bereits eine gewisse Einebnung und Glättung der neu aufgetragenen Schicht granularen Rohstoffs 140 zur Folge hat. Die Befüllung der Aufnahme mit dem granularen Rohstoff 140 erfolgt somit nicht in einem Arbeitsgang, sondern sukzessive, d.h. der granulare Rohstoff 140 wird von dem Beschichter 150 Schicht für Schicht in die Aufnahme eingebracht. Jedoch können dabei auch Unregelmäßigkeiten und/oder Unebenheiten entstehen, insbesondere Aufwölbungen bzw. Materialanhäufungen 158 und Furchen 159 an der Oberfläche des sich in der Aufnahme befindlichen granularen Rohstoffs 140. Das Einbringen des granularen Rohstoffs kann jedoch auch auf andere Weise erfolgen. Bspw. kann der Beschichter 150 anstatt einer Beschichterbürste 155 eine Beschichterlippe aufweisen. Anstelle einer Linearbewegung kann der Beschichter auch im Rahmen einer Drehbewegung über die Aufnahme bewegt werden zur Einbringung des granularen Rohstoffs in die Aufnahme des Trägers. Ausführungsformen, bei denen der granulare Rohstoff nicht mithilfe eines Beschichters, sondern mithilfe einer Rohstoffvorratseinheit in die Aufnahme eingefüllt und anschließend mit einer Bürste glattgestrichen wird, sind ebenfalls möglich.

Jedes Mal, wenn der Beschichter 150 eine neue Schicht des granularen Rohstoffs 140 in die Aufnahme eingetragen hat, wird eine Elektrode 160 über die Aufnahme bewegt, und zwar ebenfalls im Rahmen einer Linearbewegung. Während sich die Elektrode 160 über die Aufnahme bewegt, wird zwischen der Bauplatte 120 und der Elektrode 160 eine Wechselspannung angelegt. Die Wechselspannung hat einen sinusförmigen Verlauf mit einer Frequenz von 50 Hz und einen Effektivwert von 12 kV. Diese Werte sind für diesen Anwendungsfall bevorzugt. In anderen Fällen kann der Verlauf, die Frequenz und auch der Effektivwert anders gewählt werden.

Die Elektrode umfasst in diesem Ausführungsbeispiel eine Metallplatte 170. Die Metallplatte 170 ist mit einer Schicht aus Glas 180 umgeben. Die Schicht aus Glas 180 isoliert die Metallplatte 170 der Elektrode 160 gegenüber ihrer Umgebung. Zudem ist die Elektrode so ausgestaltet, dass sie sowohl mit einer vorgegebenen Geschwindigkeit als auch einem vorgegebenen Abstand über die von den Trägerelementen 130 und der Bauplatte 120 gebildeten Aufnahme bewegt bzw. verfahren werden kann. In Fig. 1 entspricht dies einer Linearbewegung der Elektrode entlang einer Horizontalen über der Aufnahme des Trägers.

Die Elektrode 160 kann auch anders ausgebildet sein, insbesondere hinsichtlich ihrer Form und Größe. Wird bspw. der Beschichter 150 im Rahmen einer Drehbewegung über die Aufnahme verfahren, bietet es sich an, die Elektrode ebenfalls im Rahmen einer Drehbewegung zu verfahren.

Nachdem die Elektrode 160 über die Aufnahme bewegt wurde, verfestigt eine Bauteilerzeugungseinheit 190 den granularen Rohstoff 140 selektiv zur Herstellung des Bauteils 110. Nach der selektiven Verfestigung des granularen Rohstoffs 140 durch die Bauteilerzeugungseinheit 190 wird die Bauplatte 120 abgesenkt, um mithilfe des Beschichters 150 eine neue Schicht granularen Rohstoffs 140 in die Aufnahme des Trägers einzubringen und die nächste Schicht des Bauteils 110 zu fertigen. Die Bauteilerzeugungseinheit 190 ist in diesem Ausführungsbeispiel ein Laserstrahlsystem und der granulare Rohstoff 140 ein Titanpulver, wobei das Titanpulver eine Teilchen- bzw. Partikelgrößenverteilung von 20 bis 55 µm aufweist (Fig. 1 stellt eine schematische Darstellung der Vorrichtung 100 dar, insbesondere der Pulverpartikel, die in Fig. 1 wesentlich größer dargestellt sind als sie in Wirklichkeit sind). Das Bauteil 110 wird demnach mittels Laserstrahlschmelzen hergestellt. In anderen Ausführungsbeispielen, mit denen ggf. auch andere granulare Rohstoffe wie insbesondere andere Metallpulver (wie z.B. ein Stahl-, Cobalt-Chrom- oder Kupferpulver), keramische Pulver, Kunststoffgranulate oder sogar Sand verarbeitet werden, kann die Bauteilerzeugungssektion 190 jedoch auch eine Laser-Sinter-Einheit, eine Elektronstrahlschmelzeinheit oder eine Binderauftragseinheit sein.

Durch das Anlegen der Wechselspannung zwischen der Bauplatte 120 und der Elektrode 160 werden die Teilchen des granularen Rohstoffs 140 abwechselnd von der Bauplatte 120 bzw. der Elektrode 160 angezogen und abgestoßen. Diese abwechselnde Anziehung bzw. Abstoßung versetzt die Teilchen des granularen Rohstoffs in Schwingungen bzw. Vibrationen. Diese Schwingungen bzw. Vibrationen führen zu einer Homogenisierung und Verdichtung des granularen Rohstoffs, und zwar vor allem der obersten Schicht des granularen Rohstoffs, die zuvor von dem Beschichter 150 in die Aufnahme eingebracht wurde und als nächstes von der Bauteilerzeugungseinheit 190 selektiv verfestigt wird. Mithilfe der Elektrode 160 kann die oberste Schicht des granularen Rohstoffs 140 somit kontaktlos geglättet und verdichtet werden.

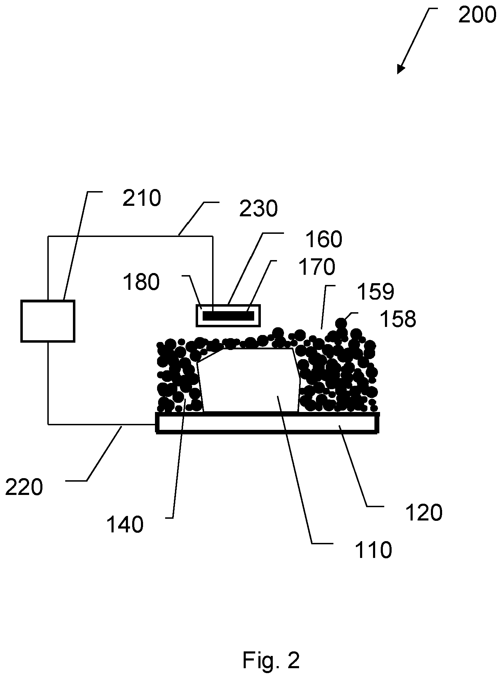

Fig. 2 zeigt einen Ausschnitt 200 der Vorrichtung 100. Der Ausschnitt 200 stellt insbesondere eine Spannungsversorgung 210 dar, welche eine Wechselspannung zur Verfügung stellt. Die Spannungsversorgung 210 ist mit der Bauplatte 120 über eine elektrische Leitung 220 und mit der Metallplatte 170 der Elektrode 160 über eine weitere elektrische Leitung 230 verbunden, und zwar so dass die Wechselspannung zwischen der Elektrode 160 und der Bauplatte 120 angelegt werden kann. Auf diese Weise kann auch der granulare Rohstoff 140 in der Aufnahme des von den Trägerelementen 130 und der Bauplatte 120 gebildeten Trägers mit der Wechselspannung beaufschlagt werden.

Die elektrische Leitung 230 ist so ausgebildet, dass sie die Linearbewegung(en) der Elektrode 160 mitausführen kann. Der elektrische Kontakt zwischen der Spannungsversorgung 210 und der Elektrode 160 besteht somit über die gesamte(n) Linearbewegung(en) der Elektrode 160 hinweg, d.h. die Elektrode kann zu jedem Zeitpunkt, an dem sie die Linearbewegung(en) ausführt, mit der Wechselspannung beaufschlagt werden. Die elektrische Leitung 220 ist in ähnlicher Weise ausgeführt, so dass die Bauplatte 120 auch dann mit der Wechselspannung beaufschlagt werden kann, wenn sie zum Auftrag einer neuen Schicht des granularen Rohstoffs 140 verfahren wird.

Die elektrische Verbindung der Spannungsversorgung 210 mit der Bauplatte 120 bzw. der Elektrode 160 kann auch anders ausgeführt werden. Sie kann insbesondere an die Gegebenheiten der jeweiligen Ausführungsform und/oder des jeweiligen Anwendungsfalls angepasst werden.

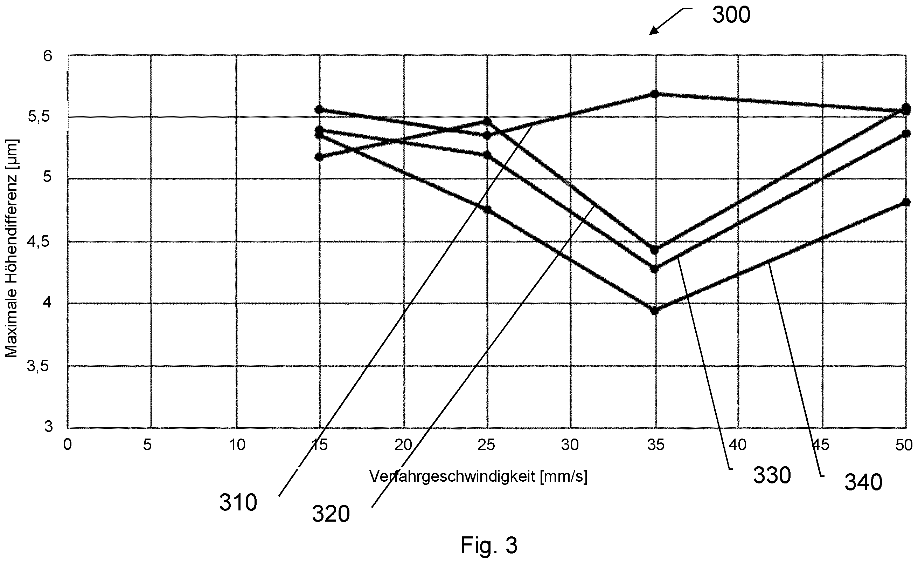

Fig. 3 zeigt ein Diagramm 300 mit Verläufen 310, 320, 330 und 340 einer maximalen Höhendifferenz. Die Verläufe 310, 320, 330 und 340 wurden mithilfe eines Profilometers und eines Referenzsystems wie folgt bestimmt.

Zunächst wurde als Teil des Referenzsystems ein Referenzträger mit einer Referenzaufnahme bereitgestellt, die den Abmessungen des Trägers und der Aufnahme des Trägers der Vorrichtung 100 entsprachen. Dem Referenzsystem wurde zudem eine Referenzspannungsversorgung und eine Referenzelektrode hinzugefügt. Die Referenzspannungsversorgung war derart ausgebildet, dass sie eine Referenzwechselspannung mit einem Effektivwert von 12 kV und einem sinusförmigen Verlauf mit einer Frequenz von 50 Hz zur Verfügung stellen konnte. Sie konnte zudem mit dem Referenzträger sowie der Referenzelektrode derart elektrisch verbunden werden, so dass granularer Rohstoff 140 in der Referenzaufnahme in der gleichen oder zumindest einer sehr ähnlichen Art und Weise mit der Referenzwechselspannung beaufschlagt werden konnte wie granularer Rohstoff 140 mit der Wechselspannung der Spannungsversorgung 210 in der Aufnahme des Trägers der Vorrichtung 100. Die Referenzelektrode war zudem so ausgebildet, dass sie in Bezug auf die Referenzaufnahme und den Referenzträger die gleichen Bewegungen wie die Elektrode 160 in Bezug auf die Aufnahme und den Träger der Vorrichtung 100 ausführen konnte.

Anschließend wurde die Referenzaufnahme des Referenzträgers mit granularem Rohstoff 140 befüllt, und zwar mit einem Titanpulver als granularem Rohstoff 140 und mithilfe eines Referenzbeschichters mit einer Referenzbürste. Das Titanpulver wies ebenfalls eine Partikelgrößenverteilung von 20 bis 55 µm auf. Nach dem Befüllen wurde mithilfe des Profilometers ein Höhenprofil des granularen Rohstoffs in der Referenzaufnahme aufgenommen, und zwar in einem Bereich, der dem Bereich der Aufnahme des Trägers der Vorrichtung 100 entspricht, in dem sich das Bauteil 110 befindet bzw. befinden würde. Als Maß für die Unregelmäßigkeiten und/oder Unebenheiten, die beim Befüllen der Referenzaufnahme mit dem Referenzbeschichter entstanden sind, wurde die maximale Höhendifferenz des aufgenommenen Höhenprofils bestimmt. In diesem Beispiel betrug die maximal Höhendifferenz des aufgenommenen Höhenprofils typischerweise ca. 20 µm.

Hiernach wurde der granulare Rohstoff 140 in der Referenzaufnahme mit der Referenzwechselspannung beaufschlagt und die Referenzelektrode 160 in einem vorgegebenen Abstand und einer vorgegebenen Geschwindigkeit in einer Linearbewegung über die Referenzaufnahme verfahren. Dabei wurde zumindest ein Teil des granularen Rohstoffs 140, der sich in der Referenzaufnahme des Referenzträgers befand, mit der Referenzwechselspannung beaufschlagt und mithilfe der Referenzwechselspannung in mechanische Schwingungen und/oder Vibrationen versetzt. Auf diese Weise wurden die Unregelmäßigkeiten und/oder Unebenheiten des zumindest einen Teils des granularen Rohstoffs 140, die beim Befüllen der Referenzaufnahme des Referenzträgers mit dem granularen Rohstoff entstanden, abgebaut bzw. ausgeglichen.

Nachdem die Referenzelektrode in dieser Weise über die Referenzaufnahme verfahren wurde, wurde ein weiteres Höhenprofil des granularen Rohstoffs 140 in der Referenzaufnahme mithilfe des Profilometers aufgenommen, und zwar ebenfalls in dem zuvor genannten Bereich. Als Maß für die Rauheit bzw. Ebenheit der Oberfläche wurde anschließend wiederum die maximale Höhendifferenz des aufgenommenen Höhenprofils bestimmt.

Um die Verläufe 310, 320, 330 und 340 des Diagramms 300 aufzunehmen, wurden die oben beschriebenen Schritte wiederholt, wobei jeweils der vorgegebene Abstand und die vorgegebene Geschwindigkeit variiert wurden. Für den Verlauf 310 wurde die Referenzelektrode in einem vorgegebenen Abstand von 0,5 mm über die Referenzaufnahme verfahren, wobei die vorgegebene Geschwindigkeit von 15 mm/s bis 50 mm/s variiert und dabei jeweils um 5 mm/s erhöht wurde. Der Verlauf 320 wurde mit denselben vorgegebenen Geschwindigkeiten durchgeführt, allerdings in einem vorgegebenen Abstand von 1 mm. Bei einem Abstand von 2 mm ergab sich der Verlauf 340 und bei einem Abstand von 5 mm der Verlauf 330.

Die Verläufe 310, 320, 330 und 340 zeigen, dass die Unregelmäßigkeiten und/oder Unebenheiten, die beim Befüllen der Referenzaufnahme mit dem Referenzbeschichter entstanden, stark abgebaut bzw. ausgeglichen werden konnten. Der Wert der maximalen Höhendifferenz konnte in allen Fällen um wenigstens 70 % reduziert werden. Zudem kann der Abbau bzw. Ausgleich der Unregelmäßigkeiten und/oder Unebenheiten durch die richtige Wahl des vorgegebenen Abstands und der vorgegebenen Geschwindigkeit optimiert werden. In diesem Beispiel konnte das beste Ergebnis für einen vorgegebenen Abstand von 2 mm und einer vorgegebenen Geschwindigkeit von 35 mm/s erzielt werden.

Derartige Messreihen können auch mit anderen Referenzsystemen und Messapparaturen erstellt werden, um die vorgegebene Geschwindigkeit und/oder den vorgegebenen Abstand zu optimieren. In vielen Fällen können die Messreihen auch mithilfe der Aufnahme des Trägers der Vorrichtung 100 erstellt werden.

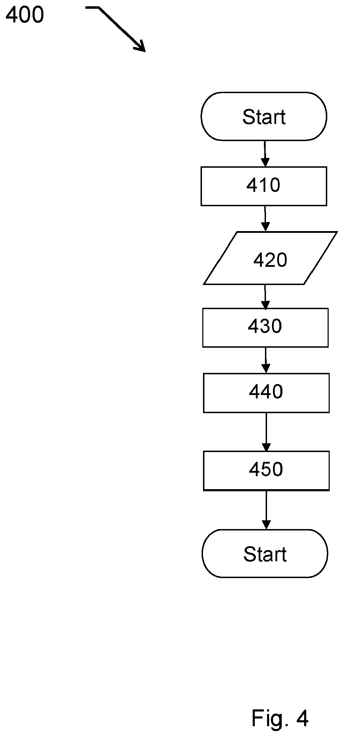

Fig. 4 zeigt einen Ablaufplan eines Ausführungsbeispiels eines erfindungsgemäßen Verfahrens 400 zur additiven Herstellung eines Bauteils 110 aus granularem Rohstoff 140. Das Verfahren wird beispielhaft mit einem Titanpulver als granularem Rohstoff 140 beschrieben. Das Titanpulver weist dabei eine Partikelgrößenverteilung von 20 bis 55 µm auf, um auf die in Fig. 3 gezeigten Messreihen zurückgreifen zu können. Das Verfahren ist jedoch nicht auf die Verarbeitung von Pulvern aus Titan und der genannten Partikelgrößenverteilung beschränkt. Es eignet sich auch - wie bereits hinlänglich ausgeführt - für die Verarbeitung anderer granularer Rohstoffe, u.a. auch mit anderen Partikelgrößenverteilungen.

Das Verfahren beginnt mit Schritt 410, in dem eine Vorrichtung 100 sowie der granulare Rohstoff 140 bereitgestellt wird. In Schritt 420 wird u.a. der Abstand und die Geschwindigkeit, mit der die Elektrode 160 über die Aufnahme des Trägers verfahren werden soll, vorgegeben. Der vorgegebene Abstand und die vorgegebene Geschwindigkeit werden dabei so gewählt, um ein Abbauen und/oder Ausgleichen etwaig vorhandener Unregelmäßigkeiten und/oder Unebenheiten zumindest eines Teils des granularen Rohstoffs, der sich in der Aufnahme des Trägers der Vorrichtung 100 befindet, durch mechanische Schwingungen und/oder Vibrationen, die mithilfe der Wechselspannung und der Elektrode 160 erzeugt werden, zu optimieren. Die Optimierung erfolgt anhand der in Fig. 3 gezeigten Verläufe 310, 320, 330 und 340, d.h. der vorgegebene Abstand beträgt 2 mm und die vorgegebene Geschwindigkeit 35 mm/s. In Schritt 430 wird mithilfe des Beschichters 150 die Aufnahme des Trägers mit einer Schicht des granularen Rohstoffs 140 befüllt. In Schritt 440 wird der granulare Rohstoff 140 in der Aufnahme des Trägers mithilfe der Elektrode 160 mit der Wechselspannung beaufschlagt, wobei zumindest ein Teil des granularen Rohstoffs 140, mit der die Aufnahme des Trägers befüllt wurde, mithilfe der Wechselspannung in mechanische Schwingungen und/oder Vibrationen versetzt wird und wobei mithilfe der mechanischen Schwingungen und/oder Vibrationen etwaig vorhandene Unregelmäßigkeiten und/oder Unebenheiten des zumindest einen Teils des granularen Rohstoffs 140, die beim Befüllen der Aufnahme des Trägers mit der Schicht des granularen Rohstoffs 140 entstehen, abgebaut und/oder ausgeglichen werden. Die Elektrode 160 wird hierzu in dem Abstand und mit der Geschwindigkeit über die Aufnahme des Trägers verfahren, die in Schritt 420 vorgegeben wurden. In Schritt 450 verfestigt die Bauteilerzeugungseinheit 190 die Schicht des granularen Rohstoffs selektiv, um das Bauteil 110 herzustellen.

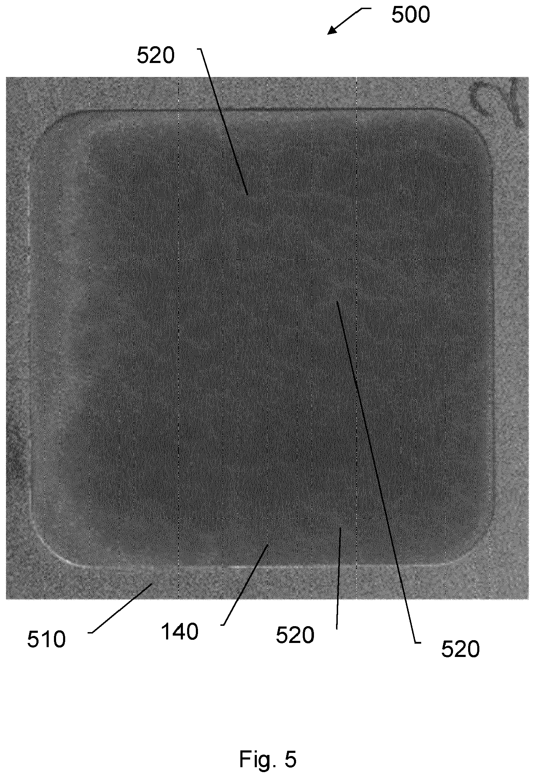

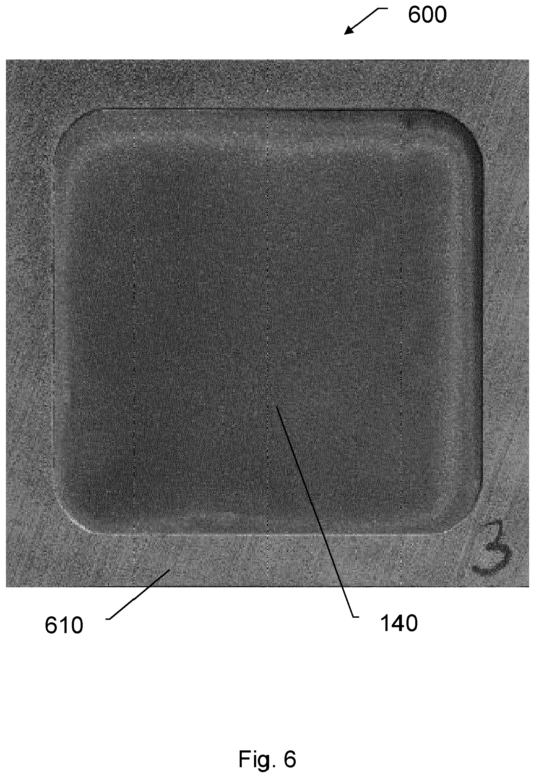

Durch die Wahl des optimalen Abstandes und der optimalen Geschwindigkeit können nicht nur die Oberflächeneigenschaften des granularen Rohstoffs 140 in der Aufnahme verbessert werden, sondern insbesondere auch Orangenhauteffekte vermieden werden. Dies soll im Folgenden anhand der Figuren 5 und 6 demonstriert werden.

Fig. 5 zeigt einen Abschnitt eines Referenzträgers 510 mit einer Referenzaufnahme, die mit granularem Rohstoff 140 befüllt ist. Die Oberfläche des granularen Rohstoffs 140 in der Referenzaufnahme weist ausgeprägte Orangenhauteffekte auf. Die Orangenhauteffekte werden v.a. durch eine Vielzahl von Rissen 520 bzw. ein Netzwerk von Rissen 520 gebildet.

Fig. 5 wurde aufgenommen, nachdem - wie im Zusammenhang mit Fig. 3 beschrieben - die Referenzaufnahme mit granularem Rohstoff befüllt und eine Referenzelektrode über die Referenzaufnahme verfahren wurde, und zwar in einem vorgegebenen Abstand von 5 mm über der Referenzaufnahme des Referenzträgers 510 und mit einer vorgegebenen Geschwindigkeit von 15 mm/s. Die Risse 520 sind demnach nicht auf das Befüllen der Referenzaufnahme des Referenzträgers 510 mit dem granularen Rohstoff 140 zurückzuführen, sondern bildeten sich anschließend aufgrund der Beaufschlagung des granularen Rohstoffs 140 mit der Wechselspannung beim Verfahren der Referenzelektrode über die Referenzaufnahme des Referenzträgers 510.

Fig. 6 zeigt einen Abschnitt eines Referenzträgers 610 mit einer Referenzaufnahme. Die Referenzaufnahme des Referenzträgers 610 ist mit granularem Rohstoff 140 befüllt, dessen Oberfläche so gut wie keine Orangenhauteffekte aufweist.

Fig. 6 wurde in der gleichen Weise aufgenommen wie Fig. 5. Allerdings wurde die Elektrode nicht in einem Abstand von 5 mm und mit einer Geschwindigkeit von 15 mm/s über die Referenzaufnahme 610 verfahren, sondern in einem vorgegebenen Abstand von 2 mm und mit einer vorgegebenen Geschwindigkeit von 35 mm/s.

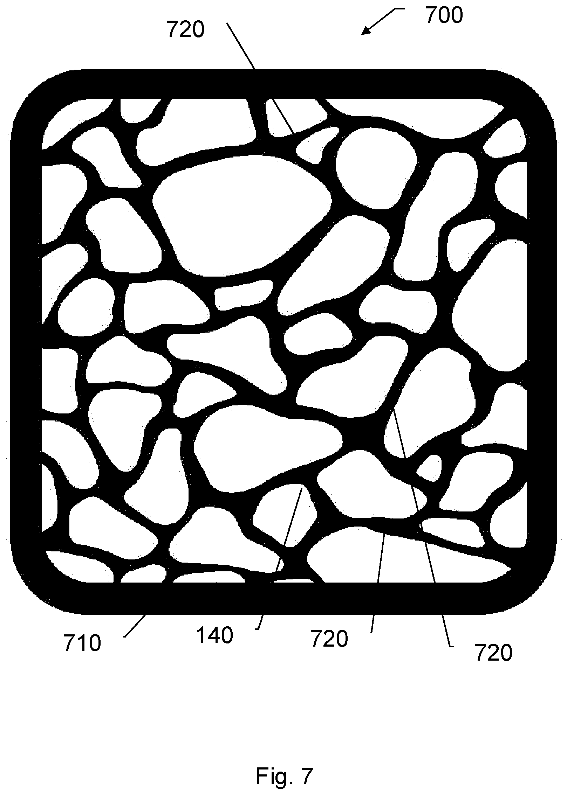

Fig. 7 zeigt eine stilisierte Darstellung des in Fig. 5 gezeigten Abschnitts. Fig. 7 zeigt somit ebenfalls einen Abschnitt eines Referenzträgers 710 mit einer Referenzaufnahme, die mit granularem Rohstoff 140 befüllt ist. Die Oberfläche des granularen Rohstoffs 140 in der Referenzaufnahme weist ausgeprägte Orangenhauteffekte auf, welche durch eine Vielzahl von zusammenhängenden Rissen 720 gebildet werden.

In Fig. 7 sind die Risse 720 im Vergleich zu den Rissen 520 in Fig. 5 vergrößert dargestellt. Dies gilt auch für die Bereiche zwischen den jeweiligen Rissen. Zudem sind die Risse 720 schwarz dargestellt, während die Risse 520 in Fig. 5 heller dargestellt sind als die von den Rissen 520 eingeschlossenen Bereiche. Letztere sind in Fig. 7 weiß dargestellt. Effekte am Rand der Referenzaufnahme, welche in Fig. 5 zu sehen sind, wurden in Fig. 7 weggelassen. Der Referenzträger 710 ist zudem als schwarzer Rahmen dargestellt.

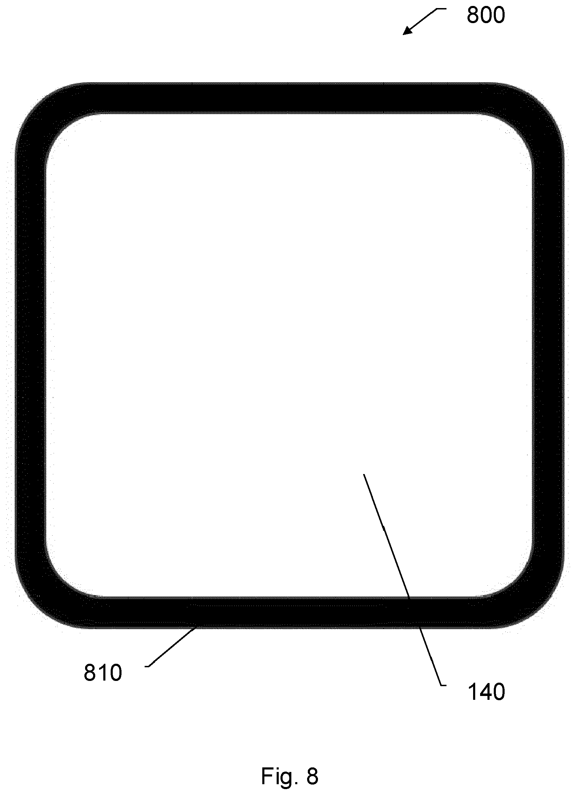

Fig. 8 zeigt ähnlich zu Figur 7 eine stilisierte Darstellung des in Fig. 6 gezeigten Abschnitts. Fig. 8 zeigt somit ebenfalls einen Abschnitt eines Referenzträgers 810 mit einer Referenzaufnahme, die mit granularem Rohstoff 140 befüllt ist. Die Oberfläche des granularen Rohstoffs weist im Gegensatz zu der in Fig. 7 dargestellten Situation so gut wie keine Orangenhauteffekte auf und damit auch keine Risse 720.

### Bezugszeichen

- 100: Vorrichtung zur additiven Fertigung
- 110: Bauteil
- 120: Bauplatte
- 130: Trägerelement
- 140: granularer Rohstoff
- 150: Beschichter
- 155: Beschichterbürste
- 158: Materialanhäufung
- 159: Furche
- 160: Elektrode
- 170: Metallplatte
- 180: Schicht aus Glas
- 190: Bauteilerzeugungseinheit

- 200: Ausschnitt
- 210: Spannungsversorgung
- 220: elektrische Leitung
- 230: weitere elektrische Leitung

- 300: Diagramm
- 310: Verlauf
- 320: Verlauf
- 330: Verlauf
- 340: Verlauf

- 400: Verfahren
- 410: Bereitstellen einer Vorrichtung und von granularem Rohstoff
- 420: Vorgeben eines Abstands und einer Geschwindigkeit
- 430: Befüllen einer Aufnahme mit granularem Rohstoff
- 440: Abbauen und/oder Ausgleichen von Unregelmäßigkeiten und/oder Unebenheiten
- 450: Selektives Verfestigen
- 500: Abschnitt eines Referenzträgers mit einer Aufnahme
- 510: Referenzträger
- 520: Riss

- 600: Abschnitt eines Referenzträgers mit einer Aufnahme
- 610: Referenzträger

- 700: stilisierter Abschnitt eines Referenzträgers mit einer Aufnahme
- 710: stilisierter Referenzträger
- 720: stilisierter Riss

- 800: stilisierter Abschnitt eines Referenzträgers mit einer Aufnahme
- 810: stilisierter Referenzträger

### zitierte Literatur

### zitierte Patentliteratur

CN 115555585 A
EP 3 943 219 A1
US 2018/243768 A1
WO 2009/000360 A1
WO 2016/205719 A1
WO 2020/260785 A1

## Patentansprüche

1. Vorrichtung (100) zur additiven Herstellung eines Bauteils (110) aus einem granularen Rohstoff (140), wobei die Vorrichtung (100) folgende Komponenten aufweist:
1.1 einen Träger mit einer Aufnahme für den granularen Rohstoff (140);
1.2 eine Bauteilerzeugungseinheit (190) zur Herstellung des Bauteils (110);
1.2.1 wobei die Bauteilerzeugungseinheit (190) und der Träger mit der Aufnahme ausgebildet sind, um das Bauteil (110) sukzessive durch selektives Verfestigen einer Schicht des granularen Rohstoffs (140) in der Aufnahme des Trägers herzustellen;
1.3 eine Spannungsversorgung (210), die eine Wechselspannung zur Verfügung stellt;
1.4 eine Elektrode (160); und
1.5 eine Steuerung;
1.6 wobei der Träger, die Spannungsversorgung (210), die Elektrode (160) und die Steuerung ausgebildet und dazu eingerichtet sind, um granularen Rohstoff (140), der sich in der Aufnahme des Trägers befindet, mit der Wechselspannung zu beaufschlagen und
1.6.1 zumindest einen Teil des granularen Rohstoffs (140), der sich in der Aufnahme des Trägers befindet und mit der Wechselspannung beaufschlagt ist, mithilfe der Wechselspannung in mechanische Schwingungen und/oder Vibrationen zu versetzen und
1.6.2 auf diese Weise etwaig vorhandene Unregelmäßigkeiten und/oder Unebenheiten (158, 159) des zumindest einen Teils des granularen Rohstoffs (140), die beim Befüllen der Aufnahme des Trägers mit der Schicht des granularen Rohstoffs (140) entstehen, abzubauen und/oder auszugleichen.

2. Vorrichtung (100) nach dem vorhergehenden Anspruch,
**dadurch gekennzeichnet,**
**dass** die Wechselspannung eine Hochspannung mit einem Effektivwert im Bereich von 1 kV bis 100 kV ist, vorzugsweise im Bereich von 3 kV bis 30 kV, besonders bevorzugt im Bereich von 6 kV bis 15 kV.

3. Vorrichtung (100) nach einem der vorhergehenden Ansprüche,
**dadurch gekennzeichnet,**
**dass** die Wechselspannung
3.1 einen Rechteckverlauf;
3.2 einen Dreieckverlauf; oder
3.3 einen sinus- / kosinusförmigen Verlauf aufweist; oder
3.4 einen Verlauf aufweist, der eine Superposition aus einem Rechteck-, Dreiecks- und/oder sinusförmigen Verlauf ist.

4. Vorrichtung (100) nach einem der vorhergehenden Ansprüche,
**dadurch gekennzeichnet,**
**dass** die Elektrode (160) mit einem thermisch beständigen Material (180) isoliert ist.

5. Vorrichtung (100) nach einem der vorhergehenden Ansprüche,
**dadurch gekennzeichnet,**
**dass** die Elektrode (160) und/oder der Träger verfahrbar sind.

6. Vorrichtung (100) nach dem unmittelbar vorhergehenden Anspruch,
**dadurch gekennzeichnet,**
**dass** die Elektrode (160), der Träger und die Steuerung ausgebildet und dazu eingerichtet sind, um die Elektrode (160) in einem vorgegebenen Abstand zu der Aufnahme des Trägers zu verfahren.

7. Vorrichtung (100) nach dem unmittelbar vorhergehenden Anspruch,
**dadurch gekennzeichnet,**
**dass** die Elektrode (160) in dem vorgegebenen Abstand zu der Aufnahme des Trägers im Rahmen einer Linearbewegung verfahren wird.

8. Vorrichtung (100) nach einem der vorhergehenden Ansprüche 5 bis 7,
**dadurch gekennzeichnet,**
**dass** die Elektrode (160), der Träger und die Steuerung ausgebildet und dazu eingerichtet sind, um die Elektrode (160) zumindest im Bereich der Aufnahme des Trägers mit einer vorgegebenen Geschwindigkeit und/oder einem vorgegebenen Geschwindigkeitsprofil zu verfahren.

9. Verfahren (400) zur additiven Herstellung eines Bauteils (110) aus einem granularen Rohstoff (140) mit folgenden Schritten:
9.1 eine Vorrichtung (100) nach einem der vorhergehenden Ansprüche wird bereitgestellt (410);
9.2 die Aufnahme des Trägers wird mit einer Schicht des granularen Rohstoffs (140) befüllt (430);
9.3 der granulare Rohstoff (140) in der Aufnahme des Trägers wird mit der Wechselspannung beaufschlagt (440);
9.3.1 wobei zumindest ein Teil des granularen Rohstoffs (140), mit der die Aufnahme des Trägers befüllt wurde, mithilfe der Wechselspannung in mechanische Schwingungen und/oder Vibrationen versetzt wird;
9.3.2 wobei mithilfe der mechanischen Schwingungen und/oder Vibrationen etwaig vorhandene Unregelmäßigkeiten und/oder Unebenheiten (158, 159) des zumindest einen Teils des granularen Rohstoffs (140), die beim Befüllen der Aufnahme des Trägers mit der Schicht des granularen Rohstoffs (140) entstehen, abgebaut und/oder ausgeglichen werden; und
9.4 die Bauteilerzeugungseinheit (190) verfestigt (450) die Schicht des granularen Rohstoffs (140) selektiv, um das Bauteil (110) herzustellen.

10. Verfahren (400) zur additiven Herstellung eines Bauteils (110) aus einem granularen Rohstoff (140) mit folgenden Schritten:
10.1 eine Vorrichtung (100) nach einem der vorhergehenden Ansprüche 6 bis 8 wird bereitgestellt (410);
10.2 die Aufnahme des Trägers wird mit einer Schicht des granularen Rohstoffs (140) befüllt (430);
10.3 der granulare Rohstoff (140) in der Aufnahme des Trägers wird mit der Wechselspannung beaufschlagt (440);
10.3.1 wobei zumindest ein Teil des granularen Rohstoffs (140), mit der die Aufnahme des Trägers befüllt wurde, mithilfe der Wechselspannung in mechanische Schwingungen und/oder Vibrationen versetzt wird;
10.3.2 wobei mithilfe der mechanischen Schwingungen und/oder Vibrationen etwaig vorhandene Unregelmäßigkeiten und/oder Unebenheiten (158, 159) des zumindest einen Teils des granularen Rohstoffs (140), die beim Befüllen der Aufnahme des Trägers mit der Schicht des granularen Rohstoffs (140) entstehen, abgebaut und/oder ausgeglichen werden;
10.3.3 wobei die Elektrode (160) in einem vorgegebenen Abstand zu der Aufnahme des Trägers verfahren wird;
10.3.4 wobei der vorgegebene Abstand so gewählt wird, um das Abbauen und/oder Ausgleichen der etwaig vorhandenen Unregelmäßigkeiten und/oder Unebenheiten (158, 159) des zumindest einen Teils des granularen Rohstoffs (140) durch die mechanischen Schwingungen und/oder Vibrationen zu optimieren; und
10.4 die Bauteilerzeugungseinheit (190) verfestigt (450) die Schicht des granularen Rohstoffs (140) selektiv, um das Bauteil (110) herzustellen.

11. Verfahren (400) zur additiven Herstellung eines Bauteils (110) aus einem granularen Rohstoff (140) mit folgenden Schritten:
11.1 eine Vorrichtung (100) nach Anspruch 8 wird bereitgestellt (410);
11.2 die Aufnahme des Trägers wird mit einer Schicht des granularen Rohstoffs (140) befüllt (430);
11.3 der granulare Rohstoff (140) in der Aufnahme des Trägers wird mit der Wechselspannung beaufschlagt (440);
11.3.1 wobei zumindest ein Teil des granularen Rohstoffs (140), mit der die Aufnahme des Trägers befüllt wurde, mithilfe der Wechselspannung in mechanische Schwingungen und/oder Vibrationen versetzt wird;
11.3.2 wobei mithilfe der mechanischen Schwingungen und/oder Vibrationen etwaig vorhandene Unregelmäßigkeiten und/oder Unebenheiten (158, 159) des zumindest einen Teils des granularen Rohstoffs (140), die beim Befüllen der Aufnahme des Trägers mit der Schicht des granularen Rohstoffs (140) entstehen, abgebaut und/oder ausgeglichen werden;
11.3.3 wobei die Elektrode (160) zumindest im Bereich der Aufnahme des Trägers mit einer vorgegebenen Geschwindigkeit und/oder einem vorgegebenen Geschwindigkeitsprofil verfahren wird;
11.3.4 wobei die vorgegebene Geschwindigkeit und/oder das vorgegebene Geschwindigkeitsprofil gewählt wird, um das Abbauen und/oder Ausgleichen der etwaig vorhandenen Unregelmäßigkeiten und/oder Unebenheiten (158, 159) des zumindest einen Teils des granularen Rohstoffs (140) durch die mechanischen Schwingungen und/oder Vibrationen zu optimieren; und
11.4 die Bauteilerzeugungseinheit (190) verfestigt (450) die Schicht des granularen Rohstoffs (140) selektiv, um das Bauteil (110) herzustellen.

12. Verfahren (400) nach dem unmittelbar vorhergehenden Anspruch,
**dadurch gekennzeichnet,**
**dass** die vorgegebene Geschwindigkeit und/oder das vorgegebene Geschwindigkeitsprofil einen Wert im Bereich von 5 bis 200 mm/s, vorzugsweise 20 bis 50 mm/s, besonders bevorzugt 30 bis 40 mm/s aufweist.

13. Verfahren (400) nach einem der vorhergehenden Ansprüche 11 oder 12,
**dadurch gekennzeichnet,**
13.1 wobei die Elektrode (160) zusätzlich in einem vorgegebenen Abstand zu der Aufnahme des Trägers verfahren wird; und
13.2 wobei der vorgegebene Abstand so gewählt wird, um das Abbauen und/oder Ausgleichen der etwaig vorhandenen Unregelmäßigkeiten und/oder Unebenheiten (158, 159) des zumindest einen Teils des granularen Rohstoffs (140) durch die mechanischen Schwingungen und/oder Vibrationen zu optimieren.

14. Computerprogramm, umfassend Befehle, die bewirken, dass eine Steuerung einer Vorrichtung (100) nach einem der vorhergehenden Ansprüche 1 bis 8 nach dem Schritt des Bereitstellens (410) der Vorrichtung (100) die weiteren Schritte eines Verfahrens (400) nach einem der vorhergehenden Verfahrensansprüche 9 bis 13 ausführt.

15. Computerlesbares Medium, auf dem das Computerprogramm nach dem unmittelbar vorhergehenden Anspruch gespeichert ist.
